(19)

Europäisches
Patentamt
European
Patent Office
Office européen
des brevets

(11) **EP 2 562 532 B1**

(12) **EUROPEAN PATENT SPECIFICATION**

(45) Date of publication and mention
of the grant of the patent:
**04.10.2017 Bulletin 2017/40**

(51) Int Cl.:
**G01N 21/01** *(2006.01)*     **G01N 21/31** *(2006.01)*
**G01N 21/03** *(2006.01)*

(21) Application number: **10850067.9**

(22) Date of filing: **04.06.2010**

(86) International application number:
**PCT/CN2010/073562**

(87) International publication number:
**WO 2011/130933 (27.10.2011 Gazette 2011/43)**

(54) **OPTICAL DETECTING METHOD AND DEVICE FOR LONG-TERM CONTINUOUSLY MONITORING LIQUID CONCENTRATION**

OPTISCHES ERKENNUNGSVERFAHREN UND VORRICHTUNG ZUR DURCHGEHENDEN LANGZEITÜBERWACHUNG DER FLÜSSIGKEITSKONZENTRATION

PROCÉDÉ ET DISPOSITIF DE DÉTECTION OPTIQUE POUR CONTRÔLER DE FAÇON CONTINUE À LONG TERME UNE CONCENTRATION DE LIQUIDE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **23.04.2010  CN 201010153974**
**23.04.2010  CN 201010153968**

(43) Date of publication of application:
**27.02.2013  Bulletin 2013/09**

(73) Proprietor: **Zhejiang University**
**Xihu District**
**Hangzhou**
**Zhejiang 310027 (CN)**

(72) Inventors:
• **YE, Shuming**
  **Zhejiang 310027 (CN)**
• **JIANG, Kai**
  **Zhejiang 310027 (CN)**
• **ZHU, Fan**
  **Zhejiang 310027 (CN)**
• **TANG, Yawei**
  **Zhejiang 310027 (CN)**

(74) Representative: **Haan, Raimond**
**Arnold & Siedsma**
**Bezuidenhoutseweg 57**
**2594 AC The Hague (NL)**

(56) References cited:
**CN-A- 101 379 388      CN-A- 101 470 074**
**CN-C- 1 299 108        JP-A- S61 184 443**
**JP-A- 2003 139 701     JP-A- 2005 127 974**
**US-A1- 2003 052 272**

• **HANS BARTH ET AL: "In-situ analysis of water quality: spectral attenuation and fluorescence", OPTICAL SENSING II, vol. 3107, 23 May 1997 (1997-05-23), XP055295681, 1000 20th St. Bellingham WA 98225-6705 USA ISSN: 0277-786X, DOI: 10.1117/12.274734 ISBN: 978-1-62841-971-9**
• **LI TIANZE ET AL.: 'Research on a New Liquid Concentration Detecting System.' ACTA PHOTONICA SINICA vol. 38, no. 4, April 2009, pages 937 - 940, XP008159715**

**Description**

FIELD OF THE INVENTION

The present invention involves an optical measurement method and apparatus, and specifically relates to an optical measurement method and apparatus for long-term and continuous monitoring of liquid concentration.

BACKGROUND

Measurement technology is a direct way to obtain data, which is essential for the automation and informatization of process. With rising of awareness of environmental protection, there are increasingly stricter requirements on discharges of "three wastes (waste gas, waste water and industrial residue)". And there are higher requirements for measurement technology with the rapid growing needs in application areas, which are embodied mainly in two aspects: (1) the persistence and continuousness of monitoring; (2) the accuracy and reliability of test results.

Traditional optical measurement methods, based on Lambert-Beer law identify concentration of testing solution according to parameters, such as absorption coefficient, the optical path length and so on, by detecting intensities of emitting light and receiving light. However, in a long-term and continuous monitoring process, the intensity of emitting light will drift slowly inevitably due to aging effect of light sources, and measurement error will result from the problems such as aging and corrosion of lenses of transmitter and receiver. Therefore, spectrophotometric measurement equipments must be calibrated regularly to ensure accuracy and reliability of test results. However, there are limitations for regular calibration: (1) the calibration must suspend the measurement, causing the testing solution cannot be detected for a certain period; for short calibration period, such calibrations should be frequent and there is large probability of measurement omissions; and for long calibration period, such calibration cannot reach the expected objectives; (2) for the production equipments with embedded measurement devices (such as inserted optical fiber probe) and chemical equipments operating under high temperature and pressure, the calibration of measurement equipment is generally difficult, or even cannot be carried out.

The closest prior art for the method according to the invention is formed by HANS BARTH ET AL: "In-situ analysis of water quality: spectral attenuation and fluorescence", OPTICAL SENSING II, vol. 3107, 23 May 1997 (1997-05-23), XP055295681. It discloses an optical measurement method for long-term and continuous monitoring of liquid concentration using a polychromatic attenumeter for the visible range, wherein a calibration in situ is performed with signal readings $I_1$ and $I_2$ at two different optical path lengths in water. A movable retroreflector - a light transmittive device - mounted on a threaded rod and driven by a DC motor, is used to change the path length in water. Light from a flash lamp is split using a beam splitter into reference path (in air) and sample path (in water). The reference path is used for normalization to the lamp intensity. It also discloses sample and reference signal detection. Signals are simultaneously measured in spectrally resolved form using two miniaturized grating polychromators. However, the reference solution and the testing solution are the same (water), and the intensity of the light emerging from water at different wavelengths $\lambda_1 ... \lambda_n$ and different path lengths is recorded. The intensities of the in-water light beams at different wavelengths $\lambda_1 ... \lambda_n$ is obtained using two different path lengths are represented as $I_1$ and $I_2$ respectively. Hence, current concentration of water is obtained by the following formula: $C(r_2-r_1) = (\ln I_1 / \ln I_2)$.

JP 2003 139701 A forms the closest prior art for the apparatus according to the invention, and discloses an infrared gas analyzer, comprising a fixed support and a cylinder that is slidably inserted in an insertion hole of a housing. A single piston is slidably inserted in the cylinder, and a window plate is provided at the tip of the cylinder. The length of an optical path in a front chamber formed by the window plates and the inner peripheral wall of an insert ring can be varied by inserting the cylinder in the insertion hole after inserting the insert rings having different lengths, and the length of an optical path in a rear chamber formed by the window plate, the tip surface of the piston and the inner peripheral surface of the cylinder can be varied by changing the position of the piston in the cylinder. Thus, JP 2003 139701 A discloses a single movable piston that seals a back gas chamber having a light transmissive glass fixed inside, wherein a front gas chamber is formed between transmissive windows. The optical lengths of the front gas chamber and rear gas chamber are changed by interposing different rings and changing the position of the cylinder separately.

JP S61 184443 A ia acknowledged as further prior art.

SUMMARY

The present invention provides an optical measurement method and apparatus for long-term and continuous monitoring of the liquid concentration.

The solution provided by the present invention for technical problems thereof is an optical measurement method for long-term and continuous monitoring of the liquid concentration, which mainly comprises the following steps:

(1) selecting two different wavelengths $\lambda'$ and $\lambda''$ according to standard curve of absorptivity of a testing solution and a reference solution, wherein the $\lambda'$ and $\lambda''$ meet following conditions:

if $\varepsilon'_1$ and $\varepsilon'_2$ represent absorptivities of the testing solution and the reference solution at a wavelength of $\lambda'$ respectively and $\varepsilon''_1$ and $\varepsilon''_2$ represent absorptivities of the testing solution and the reference solution at the wavelength of $\lambda''$ respectively, then $\varepsilon'_1 \neq \varepsilon'_2$ and $\varepsilon''_1 \neq \varepsilon''_2$ ;

(2) dividing a chamber with fixed optical path length into a chamber for the testing solution and a chamber for the reference solution using a light transmissive device, and injecting the reference solution into the chamber therefore after injecting the testing solution into the chamber therefor;

(3) entering, by a parallel light, from one end of the chamber of fixed optical path length, passing the testing solution, light transmissive device and the reference solution and then exit from the other end, and recording the intensities of emerging light at the wavelength $\lambda'$ and $\lambda''$ at the moment, wherein the intensities are represented as $I'_1$ and $I'_1$ , respectively;

(4) while keeping the light pass through the testing solution, the light transmissive device and the reference solution and maintaining pressure of the two solutions unchanged, moving the light transmissive device to change light path lengths of two solutions, and recording intensities of emerging light at the wavelength $\lambda'$ and $\lambda''$ at the moment, wherein the intensities are represented as $I'_2$ and $I''_2$, respectively;

(5) obtaining current concentration of the testing solution by the following formula:

$$C_1 = \frac{\ln I''_1 \cdot \varepsilon'_2 - \ln I''_2 \cdot \varepsilon'_2 - \ln I'_1 \cdot \varepsilon''_2 + \ln I'_2 \cdot \varepsilon''_2}{\ln I'_2 \cdot \varepsilon''_1 - \ln I'_1 \cdot \varepsilon''_1 + \ln I''_1 \cdot \varepsilon'_1 - \ln I''_2 \cdot \varepsilon'_1} \cdot C_2$$

wherein C1 refers to current concentration of testing solution and C2 refers to known concentration of the reference solution.

Further, the following improvements of the present invention are made:

(a) establishing a relation curve of change in absorbance with concentration of the testing solution, by changing the concentration of the testing solution and repeating the steps (3) ~ (5) accordingly;

(b) repeating the steps (3) ~ (4) to obtain current change in absorbance of the testing solution, and then using the relation curve of change in absorbance with concentration of the testing solution obtained by step (a) to get current concentration of the testing solution.

Further, in the step (4) of the present invention, the chamber for the testing solution connects with external testing solution through a sample inlet/outlet, and the chamber for the reference solution also connects with external reference solution through its sample inlet/outlet.

The apparatus of the present invention for conducting long-term and continuous optical monitoring of liquid concentration includes a parallel light generator; a light receiver; a chamber with fixed optical path length positioned between the light generator and the light receiver; a fixed support; a movable sleeve; first and second hollow plungers. wherein the movable sleeve is sealed with a piece of light transmissive glass fixed inside; the first and second hollow plungers, which are also placed in the movable sleeve, are on two sides of the light transmission glass respectively and form a dynamic seal with the movable sleeve; the first and second plunger, outer ends of which are connected and fixed with the fixed support, are both sealed with a piece of plunger glass fixed inside, wherein central axes of the two pieces of glass coincide with each other; length of the movable sleeve is more than twice of distance between the plunger glass of the first and second plungers; a chamber for reference solution is formed between inner end face of the plunger glass of the first plunger and the light transmission glass, and a chamber for testing solution is formed between inner end face of the plunger glass of the second plunger and the light transmission glass; inlet/outlet of testing solution and reference solution are formed on wall of the movable sleeve, wherein said inlet/outlet of testing solution connects with the chamber for testing solution and said inlet/outlet of reference solution connects with the chamber for reference solution.

Further, the two pieces of plunger glass of the present invention are at the head of the inner end of the first and second plungers respectively.

Further, the parallel ray generator is set in cavity of said first plunger and the light receiver is set in the cavity of said second plunger; the parallel light generator is opposite outer end face of the plunger glass inside the first plunger and the light receiver is opposite outer end face of the plunger glass inside the second plunger.

Further, the light receiver is set in the cavity of said first plunger and the parallel ray generator is set in the cavity of said second plunger; the light receiver is opposite outer end face of the plunger glass inside the first plunger and the parallel light generator is opposite outer end face of the plunger glass inside the second plunger.

Further, there is also a stepping motor included whose output shaft is connected with a motor screw rod; the said movable sleeve is connected with fixed fastenings that move together with the said motor screw rod by screw thread.

As compared with existing techniques, the advantages of present invention are as follows.

(1) The present invention, by innovating optical measurement theory and providing corresponding technical solution, solves stability problems during long-term operation of optical measurement devices, i.e., overcoming environmental disturbance during the measurement process.

(2) The invention might eliminate disturbance factors, i.e., a disturbance quantity A (factors including aging effect of light source, base drift of sensor), a disturbance quantity B (factors including erosion, abrasion and living things adherence problem of glass), etc., as constant variables, and prevents measurement results from disturbance.

(3) By using the present invention, a formula $C_1 = \dfrac{\ln I_1'' \cdot \varepsilon_2' - \ln I_2'' \cdot \varepsilon_2' - \ln I_1' \cdot \varepsilon_2'' + \ln I_2' \cdot \varepsilon_2''}{\ln I_2' \cdot \varepsilon_1'' - \ln I_1' \cdot \varepsilon_1'' + \ln I_1'' \cdot \varepsilon_1' - \ln I_2'' \cdot \varepsilon_1'} \cdot C_2$ can be used to obtain concentration of testing solution. It can be seen from this formula that the concentration of the testing solution is only relevant with the concentration of the reference solution, with no relation with other disturbance factors. The concentration of the testing solution would be accurate provided that the concentration of the reference solution is accurate. In such a way, a real-time and online calibration of the concentration of the testing solution might be achieved and a long-term and continuous monitoring of the concentration of the testing solution might be implemented.

(4) The invention is applicable to accurate measurement in chemical production process, continuous monitoring of pollution of "three wastes (waste gas, waste water and industrial residue)", as well as tracing and measurement of ecological factor in marine environment.

BRIEF DESCRIPTION OF THE DRAWINGS

Figure 1 is a working principle diagram of a optical measurement method of the invention.
Figure 2 is a structure diagram of a measurement apparatus for optical measurement method of the invention.

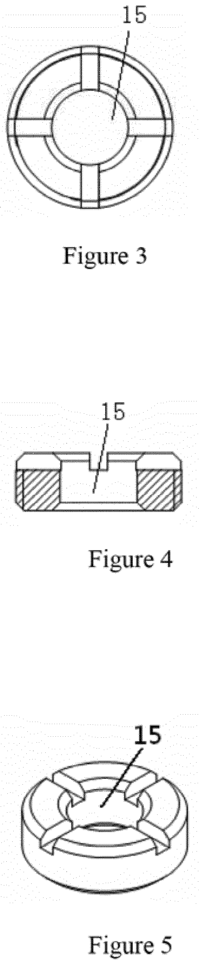

Figure 3 is a structure diagram of nut in an optical measurement apparatus of the invention.
Figure 4 is a sectional view of A-A in the figure 3.
Figure 5 is a stereoscopic structure diagram of nut of the invention.

1. Movable sleeve; 2. First plunger; 2' Second plunger; 3. Parallel light generator; 3'. Light receiver; 4. Plunger Glass; 5. Chamber of testing solution; 6. Inlet / outlet of testing solution; 7. Light transmission glass; 8. Inlet / outlet of reference solution; 9. Chamber of reference solution; 10. Stepping motor; 11. Screw rod; 12. Fixed support; 13 Fastenings; 14. Nut; 15. Chamber with fixed light path length; 16. Inlet / outlet of the chamber of testing solution; 17. Inlet / outlet of the chamber of reference solution; 18. Chamber of testing solution; 19. Chamber of reference solution; 20. Light transmissive device.

DETAILED DESCRIPTION

The invention is further described hereinafter in combination with the attached drawings and embodiments.

According to Lambert-Beer law, under certain conditions, after a monochrome ray of parallel light transmits through a solution of an absorbing medium, the intensity of the ray will reduce as the absorbing medium absorbs part of light energy. The relationship among thickness of the absorbing medium, concentration of light absorbing substance and light intensity can be expressed in formula (1):

$$I_c = I_0 \cdot e^{-\varepsilon c L} \tag{1}$$

$I_c$ denotes intensity of emerging light, 10 denotes intensity of emitting light, $\varepsilon$ denotes light absorption constant of light absorbing substance, c denotes concentration of the light absorbing substance, and L denotes optical path length of measurement light.

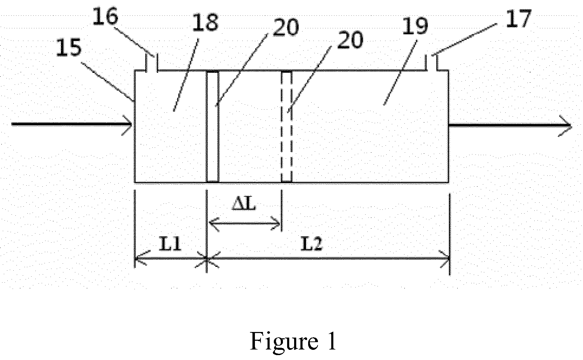

When carrying out the optical measurement method of the invention, as shown in Figure 1, the fixed chamber with fixed optical path 15 is divided into a chamber for testing solution 18 and a chamber for reference solution 19 by a light transmissive device 20. The chamber for testing solution 18 is connected with the outside through an inlet/outlet of chamber for testing solution 16, and the chamber for reference solution 19 is connected with the outside through an inlet/outlet of chamber for reference solution 17. When solutions need to be injected into the chamber for testing solution 18 and the chamber for reference solution 19, external solution can be injected through its own inlet/outlet. Similarly, when there is need to discharge the solutions in the chamber for testing solution 18 and the chamber for reference solution 19, the solutions can be discharged through their own inlet/outlet. As the chamber for testing solution 18 is connected with the outside through the inlet/outlet of chamber for testing solution 16, when the light transmissive device is moved to change optical path length of the testing solution and the reference solution, pressure of testing solution and reference solution can be kept unchanged.

After the testing solution is injected into the chamber for testing solution 18 firstly and then the reference solution is injected into the chamber for reference solution 19, the parallel ray enters from one end of the chamber with fixed optical path length 15 and exits from other end of the chamber through the testing solution, light transmissive device 20 and the reference solution. Then, the formula (1) is developed into formula (2):

$$I_c = I_0 . e^{-\varepsilon_1 C_1 L_1} . e^{-\varepsilon_2 C_2 L_2} \qquad (2)$$

in which $\varepsilon_1$, $C_1$ and $L_1$ refer to the absorption coefficient, concentration and optical path length of the testing solution, respectively; and $\varepsilon_2$, $C_2$ and $L_2$ refer to the absorption coefficient, concentration and optical path length of the reference solution, respectively.

In consideration of effect of a disturbance quantity A (factors including aging effect of light source, base drift of sensor) and a disturbance quantity B (factors including erosion, abrasion and living things adherence problem of lens), the formula (2) can be modified into formula (3):

$$I_1 = I_0 . e^{-\varepsilon_1 C_1 L_1} . e^{-\varepsilon_2 C_2 L_2} . e^{-\varepsilon_A c_A L_A} . e^{-\varepsilon_B c_B L_B} \qquad (3)$$

in which $\varepsilon_A$ , $C_A$ and $L_A$ refer to the absorption coefficient, concentration or density and optical path length of disturbance quantity A, respectively; $\varepsilon_B$ , $c_B$ and $L_B$ refer to the absorption coefficient, concentration or density and optical path length of disturbance quantity B, respectively; and I1 refers to the absorbed light intensity.

While keeping the light transmit through the testing solution, light transmissive device 20 and reference solution, the light transmissive device 20 is moved to change light path length of the testing solution and the reference solution and the pressure of the two solutions is kept unchanged. That is, when the chamber for testing solution or the chamber for reference solution becomes larger, it would result in a lower pressure or light not transmitting though the solution totally, and there is a need to inject solution again and the solution can be injected through its inlet / outlet. Similarly, when the chamber for testing solution or the chamber for the reference solution becomes smaller, it would result in a higher pressure, and there is need to discharge solution again and the solution can be discharged through its inlet/outlet. As the disturbance quantity A and the disturbance quantity B are results of a long and slow process, they can be treated as constant variables during two contiguous measurement periods. If optical path length of the testing solution is increased by $\Delta L$, then the optical path of the reference solution is reduced by $\Delta L$ and measurement equation of the later measurement period can be expressed as the formula (4):

$$I_2 = I_0 . e^{-\varepsilon_1 C_1 (L_1 + \Delta L)} . e^{-\varepsilon_2 C_2 (L_2 - \Delta L)} . e^{-\varepsilon_A c_A L_A} . e^{-\varepsilon_B c_B L_B} \qquad (4)$$

in which $I_2$ is detected intensity of emerging light after the change of the optical path. By dividing formula (4) by formula (3) and transformation, a formula (5) can be obtained:

$$\ln \frac{I_1}{I_2} = (\varepsilon_2 . C_2 - \varepsilon_1 C_1) . \Delta L \qquad (5)$$

According to standard curve of absorptivities of the testing solution and the reference solution, two different wavelengths $\lambda'$ and $\lambda''$ are selected that meet the following conditions:

using $\varepsilon'_1$ and $\varepsilon'_2$ as the absorption coefficients of the testing solution and the reference solution at the wavelength of $\lambda'$ respectively and using $\varepsilon''_1$ and $\varepsilon''_2$ as absorption coefficients of the testing solution and the reference solution at the wavelength of $\lambda''$ respectively, then $\varepsilon'_1 \neq \varepsilon'_2$ and $\varepsilon''_1 \neq \varepsilon''_2$ ;

Then, the following formula (6) is obtained with elimination of unknown variable $\Delta L$:

$$\frac{\ln I'_1 - \ln I'_2}{\ln I''_1 - \ln I''_2} = \frac{\varepsilon'_2 C_2 - \varepsilon'_1 C_1}{\varepsilon''_2 C_2 - \varepsilon''_1 C_1} \qquad (6)$$

In the above formula, $I'_1$ and $I'_2$ refer to the intensities of emerging light with wavelength of $\lambda'$ before and after changing the optical path length, $\varepsilon'_2$ refers to absorption coefficient of reference solution to the emerging light with wavelength of $\lambda'$, $C_2$ refers to concentration of the reference solution, $\varepsilon'_1$ refers to absorption coefficient of testing solution to the emerging light with wavelength of $\lambda'$, $C_1$ refers to the concentration of testing solution; $I''_1$ and $I''_2$ refer to the intensities of emerging light with wavelength of $\lambda''$ before and after changing the optical path length, $\varepsilon''_2$ refers to absorption coefficient of reference solution to the emerging light with wavelength of $\lambda''$, $\varepsilon''_1$ refers to absorption coefficient of testing solution to the emerging light with wavelength of $\lambda''$; $I'_1$ , $I'_2$ , $I''_1$ and $I''_2$ can be obtained by measurement, and constants including $\varepsilon'_2$ , $\varepsilon'_1$ , $\varepsilon''_2$ and $\varepsilon''_1$ can be obtained by spectroscopic analysis of time domain or frequency domain. The formula (6) can be transformed into a concentration formula of testing solution as shown in formula (7):

$$C_1 = \frac{\ln I''_1 \cdot \varepsilon'_2 - \ln I''_2 \cdot \varepsilon'_2 - \ln I'_1 \cdot \varepsilon''_2 + \ln I'_2 \cdot \varepsilon''_2}{\ln I'_2 \cdot \varepsilon''_1 - \ln I'_1 \cdot \varepsilon''_1 + \ln I''_1 \cdot \varepsilon'_1 - \ln I''_2 \cdot \varepsilon'_1} \cdot C_2 \qquad (7)$$

It can be known from formula (7) that the current concentration $C_1$ is relevant only with the parameters: $I'_1$, $I'_2$, $I''_1$, $I''_2$, $\varepsilon'_2$, $\varepsilon'_1$, $\varepsilon''_2$, $\varepsilon''_1$ and $C_2$, but is not relevant with disturbance quantities of stability: $\varepsilon_A$, $C_A$, $L_A$, $\varepsilon_B$, $C_B$ and $C_B$ and $L_B$ and the intensity of emitting light 10. Therefore, the optical measurement method for monitoring liquid concentration of the present invention can successfully eliminate the influence of the disturbance quantity of stability on measurement and conduct long-term and continuous monitoring of liquid concentration. The current concentration of the testing solution can be calculated according to formula (7) provided $I'_1$, $I'_2$, $I''_1$, $I''_2$, $\varepsilon'_2$, $\varepsilon'_1$, $\varepsilon''_2$, $\varepsilon''_1$ and $C_2$ can be obtained.

In sum, the optical measurement method of the present invention for long-term and continuous monitoring of the concentration of liquid mainly comprises the following steps:

(1) selecting two different wavelengths $\lambda'$ and $\lambda''$ according to standard curve of absorptivity of a testing solution and a reference solution, wherein the $\lambda'$ and $\lambda''$ meet following conditions:

if $\varepsilon'_1$ and $\varepsilon'_2$ represent absorptivities of the testing solution and the reference solution at a wavelength of $\lambda'$ respectively and $\varepsilon''_1$ and $\varepsilon''_2$ represent absorptivities of the testing solution and the reference solution at the wavelength of $\lambda''$ respectively, then $\varepsilon'_1 \neq \varepsilon'_2$ and $\varepsilon''_1 \neq \varepsilon''_2$;

(2) dividing a chamber of fixed optical path length into a chamber for the testing solution and a chamber for the reference solution using a light transmissive device, and injecting the reference solution into the chamber therefore after injecting the testing solution into the chamber therefor.

(3) entering, by a parallel light, from one end of the chamber of fixed optical path length, passing the testing solution, light transmissive device and the reference solution and then exit from the other end, and recording the intensities of emerging light at the wavelength $\lambda'$ and $\lambda''$ at the moment, wherein the intensities are represented as $I'_2$ and $I''_1$, respectively;

(4) while keeping the light pass through the testing solution, the light transmissive device and the reference solution and maintaining pressure of the two solutions unchanged, moving the light transmissive device to change light path lengths of two solutions, and recording intensities of emerging light at the wavelength $\lambda'$ and $\lambda''$ at the moment, wherein the intensities are represented as $I'_2$ and $I''_2$, respectively;

(5) obtaining current concentration of the testing solution by the following formula:

$$C_1 = \frac{\ln I_1'' \cdot \varepsilon_2' - \ln I_2'' \cdot \varepsilon_2' - \ln I_1' \cdot \varepsilon_2'' + \ln I_2' \cdot \varepsilon_2''}{\ln I_2' \cdot \varepsilon_1'' - \ln I_1' \cdot \varepsilon_1'' + \ln I_1'' \cdot \varepsilon_1' - \ln I_2'' \cdot \varepsilon_1'} \cdot C_2$$

wherein C1 refers to current concentration of the testing solution and C2 refers to known concentration of the reference solution.

Generally, the spectrophotometric measurement method calculates the current concentration of testing solution using the relation curve of absorbancy and concentration. Therefore, the present invention can change the concentration of the testing solution and repeat the described steps (3) ~ (5) to establish the relation curve of the change in absorbance of the testing solution and the concentration; and repeat the described steps (3) ~ (4) to obtain current change in absorbance of the testing solution, and then to obtain the current concentration of the testing solution using the aforesaid relation curve.

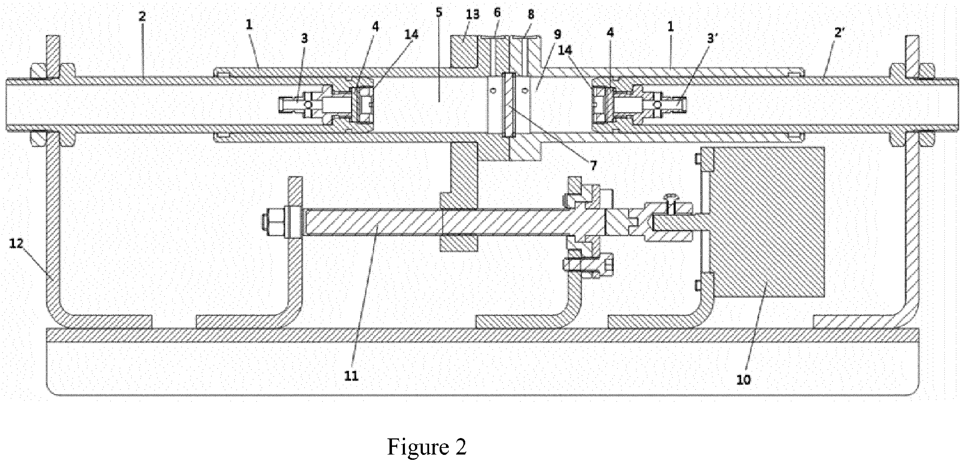

Figure 2 shows structure of a measurement apparatus for the optical measurement method of the invention, which conducts long-term and continuous optical monitoring of liquid concentration.

As shown by Figure 2, a movable sleeve 1 is a tube-shaped structure with part of a first plunger 2 and a second plunger 2' therein. The inner diameter of the movable sleeve 1 matches with outer diameter of the first plunger 2 and the second plunger 2', so as to enable the first plunger 2 and second plunger 2' to form a dynamic seal with the movable sleeve 1 by a ○-shaped seal rings and a fixed chamber in the movable sleeve 1 which locates between the first plunger 2 and the second plunger 2'.

The movable sleeve 1 is sealed with a piece of fixed light transmission glass 7 inside, and the first plunger 2 and the second plunger 2' are on the side of light transmission glass respectively, making the fixed chamber surrounded by the movable sleeve 1 and the first plunger 2 and the second plunger 2' divided into two independent chambers, i.e., a chamber for testing solution 5 and a chamber for reference solution 9. The light transmission glass 7 can be a plain glass made of organic glass, ordinary industrial glass or toughened glass.

The first plunger 2 and the second plunger 2' are two fixed plunders with the same hollow and tube-shaped structure. The chambers in one end of the first plunger 2 and the second plunger 2' are sealed with a piece of fixed plunger glass 4. The inner end face of plunger glass 4 of the first plunger 2 forms the chamber for reference solution 5 with the light transmission glass 7; and the inner end face of plunger glass of the second plunger 2' forms the chamber for testing solution 9 with the light transmission glass 7; there are inlet/outlet of testing solution 6 and inlet/outlet of reference solution 8 on the wall of movable sleeve. The inlet/outlet of testing solution 6 connects with the chamber for testing solution 5 and the inlet/outlet of reference solution 8 connects with the chamber for reference solution 9.

The central axis of the two pieces of plunger glass of the first plunger 2 and the second plunger 2' coincide with each other to ensure light entered from one plunger glass being parallel through the other plunger glass totally.

The plunger glass 4 can be flat glass made of highly transparent materials, such as organic glass, ordinary industrial glass or toughened glass, to ensure the parallel light in the measurement being able to go through the plunger glass 4. As shown by Figure 1, the plunger glass 4 can be fixed on the inner wall of the first plunger 2 and the second plunger 2' with the nut 14. The nut 14, made with outer screw thread, can be connected with the inner screw thread of the first plunger 2 and the second plunger 2' to enable the plunger glass 4 being installed and operated easily. The plunger glass 4 can be fixed on the head of the inner end of the first plunger 2 and the second plunger 2' (the end near the light transmission glass 7), making the minimum light path length of the testing solution and the reference solution be close to 0. Therefore, the measurement apparatus of the invention can be more flexible to have a larger measurable range of the concentration of the testing solution. Of course, if the plunger glass of the measurement apparatus is not fixed on the head of the inner end of the first plunger 2 and the second plunger 2' near the light transmission glass 7, but on the other positions inside the first plunger 2 and second plunger 2' instead, the continuous monitoring of the concentration of the testing solution can also be implemented. It should be pointed out that there is a central though-hole 15 in the nut 14 to ensure enough light transmission of the plunger glass and a unblocked light path between the two pieces of plunger glass 4.

The outer ends of the first plunger 2 and the second plunger 2' (the end far from the light transmission glass 7) are fixed with the fixed support 12, respectively, forming the optical path length between the plunger glass 4 of the first plunger 2 and the plunger glass 4 of the second plunger 2'. The movable sleeve 1, the first plunger 2, the second plunger 2' and the light transmission glass 7 make up two structures, whose optical path length is changed synchronously and reversely with the same amplitude.

The length of the movable sleeve 1 is more than twice of the distance between the plunger glass of the first and second plunger, to ensure part of inner end of the first and second plunger being in the movable sleeve 1 when the movable sleeve 1 is moved, in order to avoid the first and second plunger from breaking away from the movable sleeve 1.

As an embodiment of the measurement apparatus for solution concentration used in the present invention, there can be a parallel light generator 3 in the cavity of said first plunger that is opposite to the outer end face of the plunger glass inside the first plunger 2; there can be a light receiver 3' placed in the cavity of said second plunger 2' that is opposite to the outer end face of the plunger glass inside the second plunger 2'. As another embodiment of the measurement apparatus for solution concentration used in the present invention, the parallel light generator 3 can be placed in the cavity of said second plunger 2' that is opposite to the outer end face of the plunger glass inside the second plunger 2'; and the light receiver 3' can be placed in the cavity of said first plunger 2 that is opposite to the outer end face of the plunger glass inside the first plunger 2. The function of parallel light generator 3 is to emit parallel light to the chamber of testing solution 5 or the chamber of reference solution 9 to meet the requirements of the measurement of solution concentration, and pass the light through the testing solution, light transmission glass 7 and the reference solution, to enable the light receiver 3' to detect intensity of light that is absorbed by the testing solution and the reference solution.

Of course, the foresaid apparatus for measuring and monitoring the solution concentration can include its own parallel light generator 3 and light receiver 3' provided the parallel light generator 3 and the light receiver 3' are installed in cavity of the first plunger 2 and the second plunger 2' opposite to the corresponding outer end face of the plunger glass inside the plunger.

The parallel light generator 3 shown in Figure 2 is a collimating glass, which can generate parallel light by connecting optical fiber with the light generator (not shown in this figure). The light receiver 3' can also be a collimating glass, which can detect the intensity of the emerging light by connecting the optical fiber with the light receiver (not shown in this figure). This apparatus for measuring and monitoring solution concentration can improve maintainability and reusability by introducing light source and educing emerging light via the optical fiber.

In a preferred embodiment of the apparatus for measuring and monitoring solution concentration of the present invention, the apparatus is further equipped with a stepper motor 10, output shaft of which is connected to a drive screw 11. In addition, the middle part of the movable sleeve 1 is fixed with a fastening 13 that moves together with the drive screw rod 11 by a screw thread. When the stepper motor 10 runs, it will drive the drive screw 11 to rotate, and the drive screw 11 will make the fastening 13 move by the screw thread, and then the fastening 13 will result in movement of the movable sleeve 1 in axial direction, to move the glass 7 to change volume of chamber for the testing solution 5 and chamber for reference solution 9. As total volume of chamber for the testing solution 5 and chamber for reference solution 9 is kept unchanged, the volume of chamber for the testing solution 5 and chamber for reference solution 9 will be changed synchronously and reversely with the same amplitude.

When the concentration of the testing solution is measured by the apparatus shown in the Figure 2, the specific steps are as follows:

(1) selecting two different wavelengths $\lambda'$ and $\lambda''$ according to standard curve for the absorptivity of the testing solution and the reference solution, wherein the $\lambda'$ and $\lambda''$ meet following conditions:

if $\varepsilon'_1$ and $\varepsilon'_2$ represent absorptivities of the testing solution and the reference solution at a wavelength of $\lambda'$ respectively and $\varepsilon''_1$ and $\varepsilon''_2$ represent absorptivities of the testing solution and the reference solution at the wavelength of $\lambda''$ respectively, then $\varepsilon'_1 \neq \varepsilon'_2$ and $\varepsilon''_2 \neq \varepsilon''_2$;

(2) after injecting the testing solution into the chamber for the testing solution 5, injecting the reference solution into the chamber for reference solution 9;

(3) connecting the light source with measuring devices of the apparatus to enter, by light, into the collimating glass in the first plunger via optical fiber, and then passing the plunger glass in the first plunger, the testing solution, the light transmission glass 7, the reference solution, the plunger glass and collimating glass in the second plunger, and then coming into the optical detector via optical fiber;

(4) Selecting the wavelength of the incident light as $\lambda'$ and recording its intensity $I'_1$ after it pass the testing solution and the reference solution;

(5) change wavelength of the incident light to $\lambda'$, and recording its intensity $I''_1$ after it passes the testing solution and the reference solution;

(6) controlling the step motor 10 to drive the movable sleeve 1 to move so that the optical path lengths of the testing solution and the reference solution generate a pulsating quantity with the total optical path length unchanged, and then waiting for the testing solution and the reference solution being stable;

(7) recording intensity of incident light of wavelength $\lambda''$, $I'_2$ when the incident light passes the testing solution and the reference solution after the pulsation.

(8) change wavelength of the incident light to $\lambda'$, and recording intensity of the incident light of wavelength $\lambda''$, $I''_2$ when the incident light passes the testing solution and the reference solution after the pulsation;

(9) as volume changes for chamber of the testing solution 5 and the chamber for reference solution 9 are synchronous and reverse with the same change quantity, the current concentration of the testing solution can be calculated using the following formula:

$$C_1 = \frac{\ln I_1^{''} \cdot \varepsilon_2^{'} - \ln I_2^{''} \cdot \varepsilon_2^{'} - \ln I_1^{'} \cdot \varepsilon_2^{''} + \ln I_2^{'} \cdot \varepsilon_2^{''}}{\ln I_2^{'} \cdot \varepsilon_1^{''} - \ln I_1^{'} \cdot \varepsilon_1^{''} + \ln I_1^{''} \cdot \varepsilon_1^{'} - \ln I_2^{''} \cdot \varepsilon_1^{'}} \cdot C_2$$

In the above formula, C1 refers to the current concentration of testing solution and C2 refers to the known concentration of reference solution.

It can be seen from the above formula that the concentration of the testing liquid is only relevant with the concentration of reference solution, but is no relation with the other disturbance factors. The concentration of testing solution will be accurate as long as the concentration of reference solution is accurate, which ensures a real-time and online calibration of the concentration of testing solution and realizes a long-term and continuous monitoring of the concentration of the testing solution.

**Claims**

1. An optical measurement method for long-term and continuous monitoring of liquid concentration, comprising:

   (1) selecting two different wavelengths $\lambda'$ and $\lambda''$ according to standard curve of absorptivity of a testing solution and a reference solution, wherein the $\lambda'$ and $\lambda''$ meet following conditions:

   if $\varepsilon'_1$ and $\varepsilon'_2$ represent absorptivities of the testing solution and the reference solution at a wavelength of $\lambda'$ respectively and $\varepsilon''_1$ and $\varepsilon''_2$ represent absorptivities of the testing solution and the reference solution at the wavelength of $\lambda''$ respectively, then $\varepsilon'_1 \neq \varepsilon'_2$ and $\varepsilon''_1 \neq \varepsilon''_2$.

   (2) dividing a chamber with fixed optical path length (15) into a chamber for the testing solution (5, 18) and a chamber for the reference solution (9, 19) using a light transmissive device (7, 20), and injecting the reference solution into the chamber (9, 19) therefor after injecting the testing solution into the chamber (5, 18) therefor;
   (3) entering, by a parallel light, from one end of the chamber with fixed optical path length (15), passing the testing solution, light transmissive device (7, 20) and the reference solution and then exit from the other end, and recording the intensities of emerging light at the wavelength $\lambda'$ and $\lambda''$ at the moment, wherein the intensities are represented as $I'_1$ and $I''_1$, respectively;
   (4) while keeping the light pass through the testing solution, the light transmissive device (7, 20) and the reference solution and maintaining pressure of the two solutions unchanged by injecting or discharging solution, moving the light transmissive device (7, 20) to change light path lengths of two solutions, and recording intensities of emerging light at the wavelength $\lambda'$ and $\lambda''$ at the moment, wherein the intensities are represented as $I'_2$ and $I''_2$, respectively;
   (5) obtaining current concentration of the testing solution by the following formula:

   $$C_1 = \frac{\ln I_1^{''} \cdot \varepsilon_2^{'} - \ln I_2^{''} \cdot \varepsilon_2^{'} - \ln I_1^{'} \cdot \varepsilon_2^{''} + \ln I_2^{'} \cdot \varepsilon_2^{''}}{\ln I_2^{'} \cdot \varepsilon_1^{''} - \ln I_1^{'} \cdot \varepsilon_1^{''} + \ln I_1^{''} \cdot \varepsilon_1^{'} - \ln I_2^{''} \cdot \varepsilon_1^{'}} \cdot C_2$$

   wherein C1 refers to current concentration of the testing solution and C2 refers to known concentration of the reference solution.

2. The optical measurement method of claim 1, further comprising:

   (a) establishing a relation curve of change in absorbance with concentration of the testing solution, by changing the concentration of the testing solution and repeating the steps (3) ~ (5) accordingly;
   (b) repeating the steps (3) ~ (4) to obtain current change in absorbance of the testing solution, and then using the relation curve of change in absorbance with concentration of the testing solution obtained by step (a) to get current concentration of the testing solution.

3. The optical measurement method of claim 1 or claim 2, wherein in the step (4), the chamber for the testing solution (5, 18) connects with external testing solution through a sample inlet/outlet (6, 16), and the chamber for the reference solution (9, 19) connects with external reference solution through its sample inlet/outlet (8, 17).

4. An apparatus for long-term and continuous optical measurement and monitoring of liquid concentration, comprising:

a parallel light generator (3);

a light receiver (3');

a chamber with fixed optical path length (15) positioned between the light generator (3) and the light detector (3'); a fixed support (12);

a movable sleeve (1);

first and second hollow plungers (2, 2'),

wherein the movable sleeve (1) is sealed with a piece of light transmissive glass (7, 20) fixed inside; the first and second hollow plungers (2, 2'), which are also placed in the movable sleeve (1), are on two sides of the light transmissive glass respectively and form a dynamic seal with the movable sleeve (1); the first and second plunger (2, 2'), outer ends of which are connected and fixed with the fixed support (12), are both sealed with a piece of plunger glass fixed inside, wherein central axes of the two pieces of glass coincide with each other; length of the movable sleeve (1) is more than twice of distance between the plunger glasses of the first and second plungers (2, 2'); a chamber for reference solution (9, 19) is formed between inner end face of the plunger glass of the first plunger (2) and the light transmissive glass (7, 20), and a chamber for testing solution (5, 18) is formed between inner end face of the plunger glass of the second plunger (2') and the light transmission glass (7, 20); inlet/outlet of testing solution and reference solution are formed on wall of the movable sleeve (1), wherein said inlet/outlet of testing solution (6, 16) connects with the chamber for testing solution (5, 18) and said inlet/outlet of reference solution (8, 17) connects with the chamber for reference solution (9, 19); wherein the light transmissive glass (7, 20) divides the chamber with fixed optical path length (15) into the chamber for the testing solution (5, 18) and the chamber for the reference solution (9, 19), wherein said light transmissive glass (7, 20) is movable to change light path lengths of the chamber of the testing solution (5, 18) and the chamber of the reference solution (9, 19).

5. The apparatus of claim 4, wherein the two pieces of plunger glass are at the head of the inner end of the first and second plungers (2, 2') respectively.

6. The apparatus of claim 4 or claim 5, wherein the parallel ray generator (3) is set in cavity of said first plunger (2) and the light receiver (3') is set in the cavity of said second plunger (2'); the parallel light generator (3) is opposite outer end face of the plunger glass inside the first plunger and the light receiver (3') is opposite outer end face of the plunger glass inside the second plunger.

7. The apparatus of claim 4 or claim 5, wherein the light receiver (3') is set in the cavity of said first plunger (2) and the parallel ray generator (3) is set in the cavity of said second plunger (2'); the light receiver (3') is opposite outer end face of the plunger glass inside the first plunger and the parallel light generator (3) is opposite outer end face of the plunger glass inside the second plunger.

8. The apparatus of claim 4 or claim 5, wherein there is also a stepping motor (10) included whose output shaft is connected with a motor screw rod (11); the said movable sleeve (1) is connected with fixed fastenings that move together with the said motor screw rod by screw thread.

**Patentansprüche**

1. Optisches Messverfahren zur durchgehenden Langzeitüberwachung einer Flüssigkeitskonzentration, das aufweist:

(1) Auswählen von zwei verschiedenen Wellenlängen $\lambda'$ und $\lambda''$ gemäß einer Standardkurve der Absorptionsfähigkeit einer Testlösung und einer Referenzlösung, wobei $\lambda'$ und $\lambda''$ die folgenden Bedingungen erfüllen:

wenn $\varepsilon_1'$ und $\varepsilon_2'$ jeweils die Absorptionsfähigkeiten der Testlösung und der Referenzlösung bei einer Wellenlänge $\lambda'$ darstellen und $\varepsilon_1''$ und $\varepsilon_2''$ jeweils die Absorptionsfähigkeiten der Testlösung und der Referenzlösung bei einer Wellenlänge $\lambda''$ darstellen, dann $\varepsilon_1' \neq \varepsilon_2'$ und $\varepsilon_1'' \neq \varepsilon_2''$;

(2) Unterteilen einer Kammer mit fester optischer Weglänge (15) in eine Kammer für die Testlösung (5, 18) und eine Kammer für die Referenzlösung (9, 19) unter Verwendung einer lichtdurchlässigen Vorrichtung (7, 20) und Einspritzen der Referenzlösung in die Kammer (9, 19) dafür nach dem Einspritzen der Testlösung in die Kammer (5, 18) dafür;

(3) Eintreten von parallelem Licht von einem Ende der Kammer mit fester optischer Weglänge (15), Passieren der Testlösung, der lichtdurchlässigen Vorrichtung (7, 20) und der Referenzlösung und dann Austreten von dem anderen Ende und Aufzeichnen der Intensitäten des herauskommenden Lichts mit der Wellenlänge $\lambda$' und $\lambda$" zu dem Zeitpunkt, wobei die Intensitäten jeweils als $I_1$' und $I_1$" dargestellt werden;

(4) während das Licht weiterhin die Testlösung, die lichtdurchlässige Vorrichtung (7, 20) und die Referenzlösung passiert und der Druck der zwei Lösungen durch Einspritzen oder Abgeben von Lösung unverändert aufrecht erhalten wird, Bewegen der lichtdurchlässigen Vorrichtung (7, 20), um die Lichtweglängen von zwei Lösungen zu ändern, und Aufzeichnen von Intensitäten von herauskommendem Licht mit der Wellenlänge $\lambda$' und $\lambda$" zu dem Zeitpunkt, wobei die Intensitäten jeweils als $I_2$' und $I_2$" dargestellt werden;

(5) Gewinnen der aktuellen Konzentration der Testlösung durch die folgende Formel:

$$C_1 = \frac{lnI_1'' \cdot \varepsilon_2' - lnI_2'' \cdot \varepsilon_2' - lnI_1' \cdot \varepsilon_2'' + lnI_2' \cdot \varepsilon_2''}{lnI_2' \cdot \varepsilon_1'' - lnI_1' \cdot \varepsilon_1'' + lnI_1'' \cdot \varepsilon_1' - lnI_2'' \cdot \varepsilon_1'} \cdot C_2$$

wobei C1 sich auf eine aktuelle Konzentration der Testlösung bezieht und C2 sich auf eine bekannte Konzentration der Referenzlösung bezieht.

2. Optisches Messverfahren nach Anspruch 1, das ferner aufweist: (a) Festlegen einer Beziehungskurve der Änderung der Absorptionsfähigkeit mit der Konzentration der Testlösung durch Ändern der Konzentration der Testlösung und entsprechendes Wiederholen der Schritte (3) - (5);
(b) Wiederholen der Schritte (3) - (4), um die aktuelle Änderung der Absorptionsfähigkeit der Testlösung zu erhalten, und dann Verwenden der durch Schritt (a) erhaltenen Beziehungskurve der Änderung der Absorptionsfähigkeit mit der Konzentration der Testlösung, um die aktuelle Konzentration der Testlösung zu erhalten.

3. Optisches Messverfahren nach Anspruch 1 oder Anspruch 2, wobei die Kammer für die Testlösung (5, 18) in dem Schritt (4) durch einen Probeneinlass/Auslass (6, 16) mit der externen Testlösung verbindet und die Kammer für die Referenzlösung (9, 19) durch ihren Probeneinlass/Auslass (8, 17) mit der externen Referenzlösung verbindet.

4. Vorrichtung zur durchgehenden optischen Langzeitmessung und Überwachung einer Flüssigkeitskonzentration, die aufweist:

einen Parallellichtgenerator (3);
einen Lichtempfänger (3);
eine Kammer mit fester optischer Weglänge (15), die zwischen dem Lichtgenerator (3) und der Lichterfassungseinrichtung (3') positioniert ist;
eine feste Halterung (12);
eine bewegliche Hülse (1);
erste und zweite hohle Kolben (2, 2'),
wobei die bewegliche Hülse (1) mit einem Stück lichtdurchlässigem Glas (7, 20), das im Inneren fixiert ist, abgedichtet ist; die ersten und zweiten hohlen Kolben (2, 2'), die ebenfalls in der beweglichen Hülse (1) angeordnet sind, jeweils auf zwei Seiten des lichtdurchlässigen Glases sind und mit der beweglichen Hülse (1) eine dynamische Dichtung bilden; die äußeren Enden der ersten und zweiten Kolben (2, 2'), die beide mit der festen Halterung (12) verbunden und daran fixiert sind, beide mit einem im Inneren fixiertes Stück Kolbenglas abgedichtet sind, wobei die Mittelachsen der zwei Glasstücke miteinander zusammenfallen; die Länge der beweglichen Hülse (1) mehr als zweimal die Strecke zwischen den Kolbengläsern der ersten und zweiten Kolben (2, 2') ist; eine Kammer für die Referenzlösung (9, 19) zwischen der inneren Endfläche des Kolbenglases des ersten Kolbens (2) und dem lichtdurchlässigen Glas (7, 20) ausgebildet ist und eine Kammer für die Testlösung (5, 8) zwischen der inneren Endfläche des Kolbenglases des zweiten Kolbens (2') und dem lichtdurchlässigen Glas (7, 20) ausgebildet ist; der Einlass/Auslass der Testlösung und der Referenzlösung auf der Wand der beweglichen Hülse (1) ausgebildet sind, wobei der Einlass/Auslass der Testlösung(6, 16) mit der Kammer für die Testlösung (5, 18) verbindet und der Einlass/Auslass für die Referenzlösung (8, 17) mit der Kammer für die Referenzlösung (9, 19) verbindet; wobei das lichtdurchlässige Glas (7, 20) die Kammer mit fester optischer Weglänge (15) in die Kammer für die Testlösung (5, 18) und die Kammer für die Referenzlösung (9, 19) unterteilt, wobei das lichtdurchlässige Glas (7, 20) beweglich ist, um Lichtweglängen der Kammer für die Testlösung (5, 18) und der Kammer für die Referenzlösung (9, 19) zu ändern.

**5.** Vorrichtung nach Anspruch 4, wobei die zwei Stücke Kolbenglas jeweils an dem Kopf des inneren Endes der ersten und zweiten Kolben (2, 2') sind.

**6.** Vorrichtung nach Anspruch 4 oder Anspruch 5, wobei der Parallelstrahlengenerator (3) in dem Hohlraum des ersten Kolbens (2) eingerichtet ist und der Lichtempfänger (3') in dem Hohlraum des zweiten Kolbens (2') eingerichtet ist; wobei der Parallellichtgenerator (3) gegenüber der äußeren Endfläche des Kolbenglases im Inneren des ersten Kolbens ist und der Lichtempfänger (3') gegenüber der äußeren Endfläche des Kolbenglases im Inneren des zweiten Kolbens ist.

**7.** Vorrichtung nach Anspruch 4 oder Anspruch 5, wobei der Lichtempfänger (3') in dem Hohlraum des ersten Kolbens (2) eingerichtet ist und der Parallelstrahlengenerator (3') in dem Hohlraum des zweiten Kolbens (2') eingerichtet ist; wobei der Lichtempfänger (3') gegenüber der äußeren Endfläche des Kolbenglases im Inneren des ersten Kolbens eingerichtet ist und der Parallellichtgenerator (3) gegenüber der äußeren Endfläche des Kolbenglases im Inneren des zweiten Kolbens (2') eingerichtet ist.

**8.** Vorrichtung nach Anspruch 4 oder 5, wobei auch ein Schrittmotor (10) enthalten ist, dessen Ausgangswelle mit einer Motorgewindestange (11) verbunden ist; wobei die bewegliche Hülse (1) mit fixierten Befestigungen verbunden ist, die sich durch ein Schraubgewinde zusammen mit der Motorschraubstange bewegen.

**Revendications**

**1.** Procédé de détection optique pour contrôler de façon continue et à long terme une concentration de liquide, comprenant :

(1) la sélection de deux longueurs d'ondes différentes $\lambda'$ et $\lambda''$ selon une courbe standard d'absorption d'une solution d'essai et d'une solution témoin, dans laquelle $\lambda'$ et $\lambda''$ répondent aux conditions suivantes :

si $\varepsilon'_1$ et $\varepsilon'_2$ représentent des absorptions de la solution d'essai et de la solution témoin à une longueur d'onde de $\lambda'$ respectivement, et $\varepsilon''_1$ et $\varepsilon''_2$ représentent des absorptions de la solution d'essai et de la solution témoin à la longueur d'onde $\lambda''$ respectivement, alors $\varepsilon'_1 \neq \varepsilon'_2$ et $\varepsilon''_1 \neq \varepsilon''_2$ ;

(2) la division d'une chambre à chemin optique de longueur fixe (15) en une chambre pour la solution d'essai (5, 18) et une chambre pour la solution témoin (9, 19) en employant un dispositif émetteur de lumière (7, 20) et l'injection de la solution témoin dans la chambre (9, 19) à cet effet après l'injection de la solution d'essai dans la chambre (5, 18) à cet effet ;
(3) l'entrée, par une lumière parallèle, depuis une extrémité de la chambre à chemin optique de longueur fixe (15), le passage de la solution témoin, du dispositif émetteur de lumière (7, 20) et de la solution témoin, puis la sortie depuis l'autre extrémité, et l'enregistrement des intensités de lumière émergeante à la longueur d'onde $\lambda'$ et $\lambda''$ à ce moment, dans lequel les intensités sont représentées par $I'_1$ et $I''_1$, respectivement ;
(4) tout en laissant la lumière passer à travers la solution d'essai, le dispositif émetteur de lumière (7, 20) et la solution témoin et en maintenant une pression des deux solutions inchangée par une injection ou un déchargement de solution, le déplacement du dispositif émetteur de lumière (7, 20) afin de changer les longueurs de chemin de lumière des deux solutions, et l'enregistrement des intensités de lumière émergeante à la longueur d'onde $\lambda'$ et $\lambda''$ à ce moment, dans lequel les intensités sont représentées par $I'_2$ et $I''_2$, respectivement ;
(5) l'obtention d'une concentration actuelle de la solution d'essai par la formule suivante :

$$C_1 = \frac{\ln I_1'' \cdot \varepsilon_2' - \ln I_2'' \cdot \varepsilon_2' - \ln I_1' \cdot \varepsilon_2'' + \ln I_2' \cdot \varepsilon_2''}{\ln I_2' \cdot \varepsilon_1'' - \ln I_1' \cdot \varepsilon_1'' + \ln I_1'' \cdot \varepsilon_1' - \ln I_2'' \cdot \varepsilon_1'} \cdot C_2$$

dans laquelle C1 fait référence à une concentration actuelle de la solution d'essai et C2 fait référence à une concentration connue de la solution témoin.

**2.** Procédé de détection optique selon la revendication 1, comprenant en outre :

(a) l'établissement d'une courbe de relation de changement en absorbance avec concentration de la solution d'essai, en changeant la concentration de la solution d'essai et en répétant les étapes (3)~(5) en conséquence ;

(b) la répétition des étapes (3)~(4) pour obtenir un changement actuel en absorbance de la solution d'essai, puis l'utilisation de la courbe de relation de changement en absorbance avec concentration de la solution d'essai obtenue par l'étape (a) pour obtenir la concentration actuelle de la solution d'essai.

3. Procédé de détection optique selon la revendication 1 ou la revendication 2, dans lequel à l'étape (4), la chambre pour la solution d'essai (5, 18) se raccorde à une solution d'essai externe à travers une entrée/sortie d'échantillon (6, 16), et la chambre pour la solution témoin (9, 19) se raccorde à une solution témoin externe à travers son entrée/sortie d'échantillon (8, 17).

4. Appareil pour la détection optique de façon continue et à long terme et le contrôle d'une concentration de liquide, comprenant :

un générateur de lumière parallèle (3) ;
un récepteur de lumière (3') ;
une chambre à chemin optique de longueur fixe (15) positionnée entre le générateur de lumière (3) et le détecteur de lumière (3') ;
un support fixe (12) ;
un manchon mobile (1) ;
des premier et second pistons creux (2, 2'),
dans lequel le manchon mobile (1) est scellé avec un morceau de verre émetteur de lumière (7, 20) fixé à l'intérieur ; les premier et second pistons creux (2, 2'), qui sont également placés dans le manchon mobile (1), sont sur deux côtés du verre émetteur de lumière respectivement et forment un joint dynamique avec le manchon mobile (1) ; les premier et second pistons (2, 2'), dont des extrémités externes sont raccordées et fixées avec le support fixe (12), sont tous deux scellés avec un morceau de verre de piston fixé à l'intérieur, dans lequel des axes centraux des deux morceaux de verre coïncident l'un avec l'autre ; une longueur du manchon mobile (1) est supérieure à deux fois la distance entre les verres de piston des premier et second pistons (2, 2') ; une chambre pour la solution témoin (9, 19) est formée entre une face d'extrémité interne du verre de piston du premier piston (2) et le verre émetteur de lumière (7, 20), et une chambre pour la solution témoin (5, 18) est formée entre une face d'extrémité interne du verre de piston du second piston (2') et le verre émetteur de lumière (7, 20) ; une entrée/sortie de solution d'essai et de solution témoin sont formées sur une paroi du manchon mobile (1), dans lequel lesdites entrée/sortie de la solution d'essai (6, 16) se raccordent à la chambre pour solution d'essai (5, 18) et lesdites entrée/sortie de la solution témoin (8, 17) se raccordent à la chambre pour solution témoin (9, 19) ; dans lequel le verre émetteur de lumière (7, 20) divise la chambre à chemin optique de longueur fixe (15) en la chambre pour solution d'essai (5, 18) et la chambre pour solution témoin (9, 19), dans lequel ledit verre émetteur de lumière (7, 20) est déplaçable pour changer des longueurs de chemin de lumière de la chambre de la solution d'essai (5, 18) et la chambre de la solution témoin (9, 19).

5. Appareil selon la revendication 4, dans lequel les deux morceaux de verre de piston sont au niveau du sommet de l'extrémité interne des premier et second pistons (2, 2') respectivement.

6. Appareil selon la revendication 4 ou la revendication 5, dans lequel le générateur de rayonnement parallèle (3) est établi dans une cavité dudit premier piston (2) et le récepteur de lumière (3') est établi dans la cavité dudit second piston (2') ; le générateur de lumière parallèle (3) est à l'opposé d'une face d'extrémité externe du verre de piston à l'intérieur du premier piston et le récepteur de lumière (3') est à l'opposé d'une face d'extrémité externe du verre de piston à l'intérieur du second piston.

7. Appareil selon la revendication 4 ou la revendication 5, dans lequel le récepteur de lumière (3') est établi dans la cavité dudit premier piston (2) et le générateur de rayonnement parallèle (3) est établi dans la cavité dudit second piston (2') ;
le récepteur de lumière (3') est à l'opposé d'une face d'extrémité externe du verre de piston à l'intérieur du premier piston et le générateur de lumière parallèle (3) est à l'opposé d'une face d'extrémité externe du verre de piston à l'intérieur du second piston.

8. Appareil selon la revendication 4 ou la revendication 5, dans lequel il existe également un moteur pas-à-pas (10) inclus, dont l'arbre de sortie est raccordé avec une tige filetée de moteur (11) ; ledit manchon mobile (1) est raccordé avec des attaches fixes qui se déplacent avec ladite tige filetée de moteur par pas de vis.

Figure 1

Figure 2

Figure 3

Figure 4

Figure 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003139701 A

- JP S61184443 A

**Non-patent literature cited in the description**

- **HANS BARTH et al.** In-situ analysis of water quality: spectral attenuation and fluorescence. *OPTICAL SENSING II,* 23 May 1997, vol. 3107